(19) Europäisches Patentamt
European Patent Office
Office européen des brevets

(11) **EP 1 163 135 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(21) Anmeldenummer: **00912523.8**

(22) Anmeldetag: **28.02.2000**

(51) Int Cl.:
***B60T 8/00*** *(2006.01)*

(86) Internationale Anmeldenummer:
**PCT/EP2000/001657**

(87) Internationale Veröffentlichungsnummer:
**WO 2000/051862 (08.09.2000 Gazette 2000/36)**

(54) **VERFAHREN ZUR FAHRZEUGREGELUNG**

METHOD FOR CONTROLLING A VEHICLE

PROCEDE DE REGULATION DE VEHICULE

(84) Benannte Vertragsstaaten:
**DE FR GB**

(30) Priorität: **04.03.1999 DE 19909454**
**09.11.1999 DE 19953773**

(43) Veröffentlichungstag der Anmeldung:
**19.12.2001 Patentblatt 2001/51**

(73) Patentinhaber: **Continental Teves AG & Co. oHG**
**60488 Frankfurt (DE)**

(72) Erfinder:
• **EHMER, Norbert**
**D-65760 Eschborn (DE)**
• **ROLL, Georg**
**D-63150 Heusenstamm (DE)**
• **KIENLE, Lothar**
**D-68623 Lampertheim (DE)**
• **HARTMANN, Bernd-Uwe**
**D-63584 Gründau (DE)**
• **RITZ, Steffen**
**D-74366 Kirchheim (DE)**
• **HALLER, Frank**
**D-60385 Frankfurt (DE)**

(56) Entgegenhaltungen:
DE-A- 19 512 440    DE-A- 19 537 991
US-A- 4 589 511

EP 1 163 135 B1

**Beschreibung**

Die Erfindung betrifft ein Fahrzeugregelungsverfahren zur Verbesserung der Traktion eines Fahrzeugs mit Allradantrieb, insbesondere zur Verbesserung einer Antriebsschlupfregelung (ASR), ein Verfahren zum Erkennen einer diagonalen Achsverschränkung, die durch eine Verringerung der Aufstandskraft bzw. ein Abheben eines Rades einer vorderen Achse (Vorderrad) und eines diagonal gegenüberliegenden Rades einer hinteren Achse (Hinterrad) gekennzeichnet ist, von einem Fahrzeug mit Allradantrieb und einer Fahrzeugregelung, insbesondere Antriebsschlupfregelung (ASR), und eine Schaltungsanordnung zum Erkennen einer diagonalen Achsverschränkung, die durch eine Verringerung der Aufstandskraft bzw. ein Abheben eines Rades einer vorderen Achse (Vorderrad) und eines diagonal gegenüberliegenden Rades einer hinteren Achse (Hinterrad) gekennzeichnet ist, von einem Fahrzeug mit Allradantrieb und einem Antriebsschlupfregelsystem, welches Fahrzeug eine Erfassungsschaltung aufweist, zur Erfassung von gemessenen Drehverhaltensänderungen der angetriebenen Räder.

Es sind Fahrzeugregelungen bekannt, die durch den Aufbau von Bremsdruck an überdrehenden Antriebsrädern den Radschlupf auf ein für die Gewährleistung der Traktion und der Fahrstabilität notwendigen Wert reduzieren und den aufstehenden Rädern ein stärkeres Antriebsmoment aufgeben. Diese existieren sowohl für zweiradgetriebene als auch für allradgetriebene Fahrzeuge. Diese Fahrzeugregelungen werden als Antriebsschlupfregelungen (ASR) bezeichnet. Ferner sind für diese Regelungen die Bezeichnungen "Elektronische Differentialsperre (EDS)", Automatische Stabilitäts-Kontrolle (ASC)" oder "Traction Control System (TCS)" gebräuchlich.

Bei den ASR-Systemen sind zwei Ausführungen zu unterscheiden: ASR und Bremsen-ASR (BASR) oder Bremsen-TCS (BTCS). ASR drosselt in bestimmten Situationen zusätzlich das Motordrehmoment, um die Belastung der Bremsen so gering wie möglich zu halten. Bremsen-ASR wirkt ausschließlich über einen automatischen Bremseneingriff. Im folgenden sind mit der Bezeichnung "ASR" alle denkbaren Antriebsschlupfregelungen, also solche mit und ohne Eingriff in das Motormanagement gemeint.

Die Auslegung der Antriebsschlupfgregelsysteme erfolgt im Grunde für den durch weitgehend ebenen Untergrund und zumindest seitenweise annähernd gleichen Reibwert gekennzeichneten Straßeneinsatz.

Wenn ein allradgetriebenes Fahrzeug ohne Achssperrdifferential im Gelände über eine diagonale Furche fährt, so daß an einem diagonal gegenüberliegenden Vorderrad und Hinterrad der Bodenkontakt verlorengeht, drehen diese beiden Räder durch und verhindern damit, daß ein Antriebsmoment auf die beiden aufliegenden Räder (die beiden entlang der anderen Fahrzeugdiagonale gegenüberliegenden Räder) gegeben wird. Da sich das Fahrzeug dabei erheblich verspannt, sollte diese Situation möglichst rasch überwunden werden. Dazu ist ein kräftiger Vortrieb erforderlich, um das Fahrzeug zu bewegen. Eine ansteigende Fahrbahn oder ein abruptes Hindernis, beispielsweise ein Stein, vor einem oder mehreren Rädern erschwert die Situation zusätzlich.

Eine hinreichende Traktion kann in diesem Fall nur mit Hilfe einer Differentialsperre erzielt werden. Denn in der Praxis zeigt sich, daß die in den bisherigen ASR-Systemen realisierten Maßnahmen nicht ausreichen, da meist zu große Schlupfwerte an den durchdrehenden Rädern toleriert werden. Der Bremsdruck wird an den entlasteten Rädern für einen zu kurzen Zeitraum in den Bremsen gehalten, so daß sich eine mit einer Diffentialsperre vergleichbaren Sperrwirkung nicht einstellt.

Die angetriebenen Räder einer Fahrzeugdiagonale geraten wechselseitig in den Antriebsschlupf und das Motormoment oszilliert zwischen den betreffenden Rädern in Abhängigkeit von der momentanen Radlast, dem Bremsdruck und dem Motormoment. Die Druckmodulation in den angetriebenen Rädern eilt dem Antriebsschlupf nach. Ein stationärer Zustand stellt sich nicht ein. Das Fahrzeug bleibt stecken.

Mit Hilfe der nachfolgenden Betrachtung soll das Problem verdeutlicht werden.

Die in einem mit konstanter Drehzahl U/t rotierenden und mit konstanter Bremskraft FB beaufschlagten Rad verbrauchte Leistung PB beträgt:

$$PB = FB * vB = FB * 2 * \pi * r_{eff} * U/t \qquad (1)$$

Dabei ist $r_{eff}$ der effektive Radradius, an dem die Bremskraft wirkt. U/t soll in der Einheit Radumdrehungen pro Sekunde angegeben werden.

Unter der beispielhaften Annahme, daß auf einer diagonalen Furche das linke Vorderrad und das rechte Hinterrad durchdrehen und von der Traktionskontrolle bebremst werden, ergeben sich folgende Gleichungen für die verbrauchte Leistung:

$$PB1 = FB1 * vB1 = FB1 * 2 * \pi * r_{eff1} * U1/t \qquad (2.1)$$

$$PB3 = FB3 * vB3 = FB3 * 2 * \pi * r_{eff3} * U3/t \qquad (2.2)$$

Die Radindizes sind im Uhrzeigersinn gewählt:

1 = linkes Vorderrad
2 = rechtes Vorderrad
3 = rechtes Hinterrad
4 = linkes Hinterrad

Unter der Annahme, daß die Bremsen an den Rädern in etwa gleich dimensioniert sind und die Drehzahlen der durchdrehenden Räder sowie die Bremskräfte ebenfalls gleich sind, kann die Summenleistung vereinfacht angegeben werden:

$$PBges = FB * 4 * \pi * r_{eff} * U/t \qquad (3)$$

Das von den Rädern aufgebrachte Summen-Bremsmoment MBges, das über die Achsendifferentiale bzw. das Mittendifferential auf die übrigen Räder als Summen-Antriebsmoment MAges wirkt, beträgt:

$$MAges_{(durchdrehende\ Räder)} = MAges_{(traktierende\ Räder)} = FB * 2\ r_{eff} \qquad (4)$$

Es zeigt sich in Gleichung (3), daß man mit hinreichend hoher Drehzahl U/t der durchdrehenden Räder und mittlerer Bremskraft FB leicht die gesamte Motorleistung verbrauchen kann. Mit zu kleinen Bremskräften FB wird gemäß Gleichung (4) nur ein geringes Antriebsmoment bereitgestellt. In extremen Situationen im Gelände, speziell bei diagonaler Verschränkung, wird aber zumindest kurzzeitig ein hohes Spitzenmoment benötigt, um das Fahrzeug aus der "Verklemmsituation" zu befreien.

Diese Situation kommt relativ häufig auf unebenen Böden vor, da eine starke Unebenheit immer zum Abheben zunächst eines Rades und zum Kippen über eine Diagonale führt, die das abhebende Rad nicht beinhaltet. Das Rad, das sich diagonal zum abhebenden Rad befindet, wird seine Aufstandskraft ebenfalls in den meisten Fällen ganz oder teilweise verlieren, was von der Kipprichtung und der Schräglage des Fahrzeugs abhängt.

Aus der US-A-4 589 511 ist ein Verfahren zur Verbesserung einer Antriebsschlupfregelung offenbart, bei dem eine Verringerung einer Aufstandskraft eines Rades einer vorderen oder hinteren Achse eines Fahrzeugs ermittelt wird.

Aufgabe der Erfindung ist es daher, ein Verfahren zur Fahrzeugregelung, insbesondere für Fahrsituationen auf unebenen Böden, zu verbessern. Nach einer Teilaufgabe soll ferner ein Verfahren und eine Schaltungsanordnung bereitgestellt werden, mit welchen eine diagonale Achsverschränkung, die insbesondere durch eine Fahrsituation auf unebenen Böden mit diagonalen Furchen oder abrupten Hindernissen hervorgerufen wurde, sicher erkannt wird.

Die Aufgabe wird erfindungsgemäß durch ein Verfahren nach Patentanspruch 1 gelöst.

Beim erfindungsgemäßen Verfahren zur Fahrzeugregelung wird zuerst die Situation einer diagonalen Achsverschränkung ermittelt. Der Zustand der Achsverschränkung wird dann als Regelgröße für die Fahrzeugregelung ausgewertet. Nach Maßgabe dieser Regelgröße kann ein gezielter Eingriff insbesondere des Fahrzeugregelungs-Systems in beispielsweise die Bremsenregelung, das Motormanagement, die Getriebefunktion und/oder die Funktion von Differentialsperren erfolgen.

Erfindungsgemäß wird nach der Ermittlung der diagonalen Achsverschränkung, mit Mitteln der Fahrzeugregelungs-Systems, insbesondere einer Bemessung und/oder Modulation des Bremsdrucks in den Radbremsen der geregelten Räder, die Wirkung einer teilweisen oder vollständigen Sperrung eines Mitten-, Vorderachs- und/oder Hinterachsdifferentials erzielt und/oder ein Mitten-, Vorderachs- und/oder Hinterachsdifferential wird mit Hilfe einer gegebenenfalls vorhandenen Differentialsperre teilweise oder vollständig gesperrt.

**EP 1 163 135 B1**

Das Verfahren beinhaltet zunächst als Voraussetzung das Erkennen des Bedarfs eines quergesperrten Zustands und die anschließende Einstellung des quergesperrten Zustands mit Mitteln des Fahrzeugregelungs-Systems, vorzugsweise mit einer Bremsenregelung durch das Antriebsschlupfregelsystem, wobei zusätzlich ein oder mehrere gegebenenfalls vorhandenen Differentialsperren, beispielsweise eine Mittendifferentialsperre, eingeschaltet werden können. Es ist aber auch möglich, ein oder mehrere gegebenenfalls vorhandenen Differentialsperren alternativ zur Bremsenregelung einzusetzen. Ferner ist es nach der Erfindung vorgesehen, zusätzlich zu dem Bremseneingriff auch einen Eingriff in das Motormanagement durchzuführen, beispielsweise durch Steuerung von Stellgliedern, wie Drosselklappe oder Zündung.

Es ist nach der Erfindung vorgesehen, daß nach der Ermittlung der diagonalen Achsverschränkung, ein entsprechend der geforderten Traktion mittleres Bremsdruckniveau an den Radbremsen der geregelten Räder bei einem minimalen Antriebsschlupf eingestellt und für einen bestimmten Zeitraum gehalten wird.

Eine hinreichende Traktion wird in diesem Fall erreicht, indem der Bremsdruck an den entlasteten Rädern zwecks Erzeugung einer mit einer Differentialsperre vergleichbaren Sperrwirkung für einen Zeitraum in den Bremsen gehalten wird, bis die Situation der diagonalen Achsverschränkung überwunden ist. Das eingangs beschriebene periodische Oszillieren des Motordrehmoments zwischen den Rädern einer Fahrzeugdiagonale wird so, nachdem die Achsverschränkung durch das erfindunsgemäße Verfahren erkannt wurde, durch Beseitigung des Nacheilens des Bremsdrucks sicher unterbunden. Der gesperrte Zustand der Differentiale bzw. die vergleichbare Wirkung eines gesperrten Zustands bleibt in vorteilhafter Weise für einen Zeitraum erhalten, der so gewählt wird, daß er ausreicht, um das Fahrzeug über das Hindernis hinweg zu bewegen. Die Drehzahl U/t der durchdrehenden Räder wird durch stärkeres Einbremsen gesenkt. Dadurch ergibt sich ferner ein deutlicher Komfortforteil, ein Räderscharren wird weitestgehend vermieden und die Motordrehzahl bleibt konstant relativ niedrig. Darüber hinaus wird so der Reifenverschleiß minimiert.

Die Regelung der betroffenen Räder erfolgt erfindungsgemäß bei relativ kleinen Schlupfwerten, vorzugsweise kleiner 30 km/h, so daß sich erhöhte Druckniveaus an den Radbremsen einstellen. In extremen Fällen werden hierfür die durchdrehenden Räder auf Traktionsschlupfwerte nahe null(0) heruntergebremst.

Ein verstärkter Druckaufbau und ein verzögerter Druckabbau des Bremsendrucks kann vorteilhaft durch Veränderung der Druckaufbau-und Abbaugradienten erzielt werden. Die Druckmodulation kann weiter durch einen schnelleren Druckaufbau oder einen verlangsamten Druckabbau verändert werden. Dies kann erreicht werden durch eine Verkürzung der Pausenzeit während des Druckaufbaus und eine Verlängerung der Pausenzeiten während das Druckabbaus bei unveränderten Druckaufbau- bzw. Druckabbaupulsen oder durch Vergrößerung der Druckaufbaupulse und Verringerung der Druckabbaupulse bei unveränderten Pausenzeiten.

Erfindungsgemäß erfolgt nach dem Erkennen einer diagonalen Achsverschränkung zusätzlich eine Absenkung der Regelschwelle des Antriebsschlupfregelsystems.

Durch eine Absenkung der ASR-Regelschwellen wird der Antriebsschlupf zusätzlich verringert. Diese Manipulation der Regelschwelle bei einer erkannten Gelände-Situation einer diagonalen Achsverschränkung erfolgt vorteilhaft nur an den in einer aktiven ASR-Regelung befindlichen Rädern. Es werden dann vorteilhaft nur die betroffenen Räder mit kleinen Schwellen geregelt, um zu vermeiden, daß stabile Räder in eine ASR-Regelphase kommen.

Nach einer weiteren Ausgestaltung der Erfindung ist es vorgesehen, daß die ermittelte diagonale Achsverschränkung als Regelgröße ausgewertet wird und/oder eine entsprechende Regelungsfunktion der Fahrzeugregelung nur dann in Funktion gesetzt wird, wenn die Fahrzeuggeschwindigkeit, insbesondere eine berechnete oder geschätzte Fahrzeugreferenzgeschwindigkeit, einen vorgegebenen Fahrzeuggeschwindigkeits-Grenzwert, vorzugsweise im Bereich von 3 bis 15 km/h, insbesondere ca. 6 km/h, unterschreitet. Da die Situation einer diagonalen Achsverschränkung im Grunde eine Standardsituation auf unebenen Böden und damit insbesondere im Gelände darstellt, erfolgt eine teilweise oder vollständige Sperrung eines Mitten -, Vorderachs- und/oder Hinterachsdifferentials und/oder wird eine derartige Wirkung mit Mitteln des Antriebsschlupfregelsystems mit Hilfe dieser Verfahrensweise nur dann durchgeführt, wenn eine ensprechend niedrige Fahrzeuggeschwindigkeit vorliegt.

Nach der Erfindung wird eine diagonale Achsverschränkung, die durch eine Verringerung der Aufstandskraft bzw. ein Abheben eines Rades einer vorderen Achse (Vorderrad) und eines diagonal gegenüberliegenden Rades einer hinteren Achse (Hinterrad) gekennzeichnet ist, von einem Fahrzeug mit Allradantrieb und einer Fahrzeugregelung, insbesondere Antriebsschlupfregelung (ASR), mit einem Verfahren erkannt, welches die diagonale Achsverschränkung auf Grundlage des Radschlupfs, des Drehverhaltens und/oder von Drehverhaltensänderungen der einzelnen, angetriebenen Räder ermittelt, wobei die diagonale Achsverschränkung auf Grundlage des Drehverhaltens und/oder von Drehverhaltensänderungen von mindestens zwei transversal gegenüberliegenden Rädern sowie von zwei jeweils diagonal gegenüberliegenden Radpaaren ermittelt wird.

Der Begriff "Fahrzeuge mit Allradantrieb" umfaßt im Sinne der Erfindung sowohl Fahrzeuge mit permanent mindestens vier angetriebenen Rädern an mindestens zwei angetriebenen Achsen, als auch primär mit einer Achse angetriebene Fahrzeuge, bei denen eine zweite Achse im Bedarfsfall zusätzlich hinzugeschaltet werden kann. Dies kann manuell oder automatisch, zum Beispiel mit Hilfe einer Viscokupplung erfolgen.

Vorteilhaft werden durch dieses Verfahren die Situationen erkannt, in denen ein allradgetriebenes Fahrzeug im Gelände über eine diagonale Furche fährt. Durch Ermittlung des Drehverhaltens bzw. der Drehverhaltensänderungen kann insbesondere erkannt werden, wenn an einem diagonal gegenüberliegenden Vorderrad und Hinterrad der Bodenkontakt verlorengeht und diese beiden Räder durchdrehen.

Nach einer bevorzugten Ausgestaltung der Erfindung wird das Drehverhalten der einzelnen, angetriebenen Räder gemessen und zur Ermittlung des Antriebsschlupfs und anderer Regelgrößen ausgewertet und eine diagonale Achsverschränkung wird auf Grundlage eines über einen vorgegebenen Grenzwert liegenden Antriebsschlupfs der einzelnen Räder ermittelt.

Der Begriff "transversal gegenüberliegende Rädern" bedeutet im Sinne der Erfindung, daß die zwei Räder transversal, bezogen auf die Fahrzeuglängsachse, gegenüberliegen. Es handelt sich somit um ein rechtes Rad und ein linkes Rad einer Radachse. Unter dem Begriff "zwei jeweils diagonal gegenüberliegende Radpaare" sind hier jeweils die zwei entlang einer Fahrzeugdiagonalen sich gegenüberliegenden Räder gemeint, daß bedeutet das rechte Vorderrad und linke Hinterrad (erste Fahrzeugdiagonale) sowie das linke Vorderrad und das rechte Hinterrad (zweite Fahrzeugdiagonale).

Es ist erfindungsgemäß vorgesehen, daß eine diagonale Achsverschränkung dann ermittelt wird, wenn bestimmte Antriebsschlupfbedingungen für einen vorbestimmten Zeitraum erfüllt sind.

Erfindungsgemäß wird eine diagonale Achsverschränkung dann ermittelt, wenn die folgenden Bedingungen für einen vorbestimmten Zeitraum erfüllt sind, daß a) an der sekundären Achse nur an einem Rad ein über einen vorgegebenen Grenzwert liegender Antriebsschlupfs vorliegt, b) an beiden von zwei sich diagonal gegenüberliegenden Rädern eines Radpaares ein über dem vorgegebenen Grenzwert liegender Antriebsschlupf vorliegt und c) ein unter dem vorgegebenen Grenzwert liegender Antriebsschlupf an einem ersten Rad der primären Achse vorliegt, welches erste Rad einem zweiten Rad der primären Achse mit einem über den vorgegebenen Grenzwert liegenden Antriebsschlupf gegenüberliegt oder zumindest ein geringerer Bremsdruck, im Vergleich zu dem zweiten Rad der primären Achse mit einem über den vorgegebenen Grenzwert liegenden Antriebsschlupf, in der Radbremse des ersten Rads der primären Achse vorliegt, welches erste Rad dem zweiten Rad der primären Achse mit einem über den vorgegebenen Grenzwert liegenden Antriebsschlupf gegenüberliegt.

Mit der Bezeichnung "primäre Achse" ist hier die vom Motor zuerst angetriebene Achse oder allgemein die Achse mit einem höheren Antriebsmoment oder größeren Aufstandskräften gemeint. Die primäre Achse ist weiter dadurch charakterisiert, daß die Räder der primären Achse unter der Annahme von denselben Fahrbedingungen im Vergleich zu den Rädern der sekundären Achse zuerst in einen Antriebsschlupf kommen. Für die Achse, über die im Zustand ohne einen Antriebsschlupf kein oder nur ein geringeres Antriebsmoment übertragen wird, wird hier der Begriff "sekundäre Achse" verwendet. Erst bei einer entsprechenden Differenzdrehzahl wird an dieser sekundären Achse entsprechend der Antriebsschlupfregelung ein größeres Antriebsmoment übertragen.

Erfindungsgemäß wird der Zustand einer diagonalen Achsverschränkung dann ermittelt, wenn die Bedingungen a) bis c) für einen Zeitraum von 0,3 bis 1,5 sec., erfüllt sind. Der genaue Wert kann durch relativ wenige Versuche individuell ermittelt werden. Er ist von der Dynamik des Antriebsstranges des jeweiligen Fahrzeugs abhängig. In einem Fall hat sich z.B. ein Wert von ca. 0,7 sec. als besonders günstig erwiesen.

Nach der Erfindung wird eine diagonale Achsverschränkung dann ermittelt, wenn die bestimmten Antriebsschlupfbedingungen für einen relativ kurzen Zeitraum, vorzugsweise 50 bis 200 msec., insbesondere ca. 100 msec., erfüllt sind und wenn die davor zuletzt ermittelte diagonale Achsverschränkung höchstens einige Sekunden, vorzugsweise 5 bis 15 sec., insbesondere ca. 10 sec., zurück liegt. Hier wird also die diagonale Achsverschränkung dann bereits erkannt, wenn in einem relativ kurzen Zeitraum von beispielsweise ca. 100 msec., das Muster bzw. die Bedingungen des Antriebsschlupfs vorliegt und wenn die Situation der diagonalen Achsverschränkung vorher, innerhalb einer Nachlaufzeit von z.B. ca. 10 sec. bereits ermittelt wurde.

Es ist erfindungsgemäß vorgesehen, daß ein Antriebsschlupf, bezogen auf die Radumdrehungsgschwindigkeit des durchdrehenden Rads, in der Größenordnung zwischen 10 km/h bis 40 km/h , vorzugsweise ca. 30 km/h, als Antriebsschlupf-Grenzwert vorgegeben wird.

Nach einer weiteren Ausgestaltung der Erfindung ist ebenso vorgesehen, daß der Antriebsschlupf-Grenzwert an einem Rad als überschritten gilt, wenn ein Regelvorgang des Antriebsschlupfregelsystems an dem jeweiligen Rad einsetzt oder anhält. Das Antriebsschlupfregelsystems ist dann aktiv, wenn es an der jeweiligen Radbremse einen Druckaufbau, ein Halten des Drucks oder einen Druckabbau regelt.

Bei dem Verfahren zur Fahrzeugregelung, insbesondere zur Antriebsschlupfregelung (ASR), wird erfindungsgemäß die diagonale Achsverschränkung mit Hilfe eines Verfahrens nach einem der Ansprüche 4 bis 11 ermittelt. Damit ist eine sichere Ermittlung der diagonalen Achsverschränkung gewährleistet.

Die zugrunde liegende Teilaufgabe wird ferner durch eine Schaltungsanordnung gemäß Anspruch 13 gelöst.

Nach einer erfindungsgemäßen Ausgestaltung ist die Schaltungsanordnung dadurch gekennzeichnet, daß die erste Ermittlungsschaltung eine erste Auswertungsschaltung, zur Auswertung eines Schlupfs der Räder an der sekundären Achse aufweist, daß die erste Ermittlungsschaltung eine zweite und eine dritte Auswertungsschaltung aufweist, zur Auswertung eines Schlupfs der Räder der jeweils zwei diagonal gegenüberliegenden Radpaare, daß die erste Ermittlungsschaltung eine vierte Auswertungsschaltung aufweist, zur Auswertung eines Schlupfs der Räder an der primären Achse, und daß die erste Ermittlungsschaltung einen Integrator und einen Signalerzeuger aufweist, zur Erzeugung eines Signals, wenn mit Hilfe der Auswertung durch die erste, zweite, dritte und vierte Auswertungsschaltung über einen vorbestimmten Zeitraum bestimmte, für eine diagonale Achsverschränkung typische Schlupfbedingungen erkannt werden.

Es ist nach der Erfindung vorgesehen, daß der ersten Ermittlungsschaltung eine zweite Ermittlungsschaltung zugeordnet ist, für die Ermittlung einer Fahrzeugreferenzgeschwindigkeit anhand gemessener Werte, und daß die erste Ermittlungsschaltung einen Vergleicher aufweist, um die ermittelte Fahrzeugreferenzgeschwindigkeit mit einem vorbestimmten Grenzwert zu vergleichen und wobei die erste Ermittlungsschaltung ein Signal für das Vorliegen einer diagonalen Achsverschränkung nur dann erzeugt, wenn die ermittelte Fahrzeugreferenzgeschwindigkeit den vorbestimmten Wert unterschreitet.

Die Erfindung soll im folgenden anhand von zwei Flußdiagrammen (Fig. 1 und Fig.2) und einem Blockschaltbild (Fig. 3) beispielhaft näher erläutert werden.

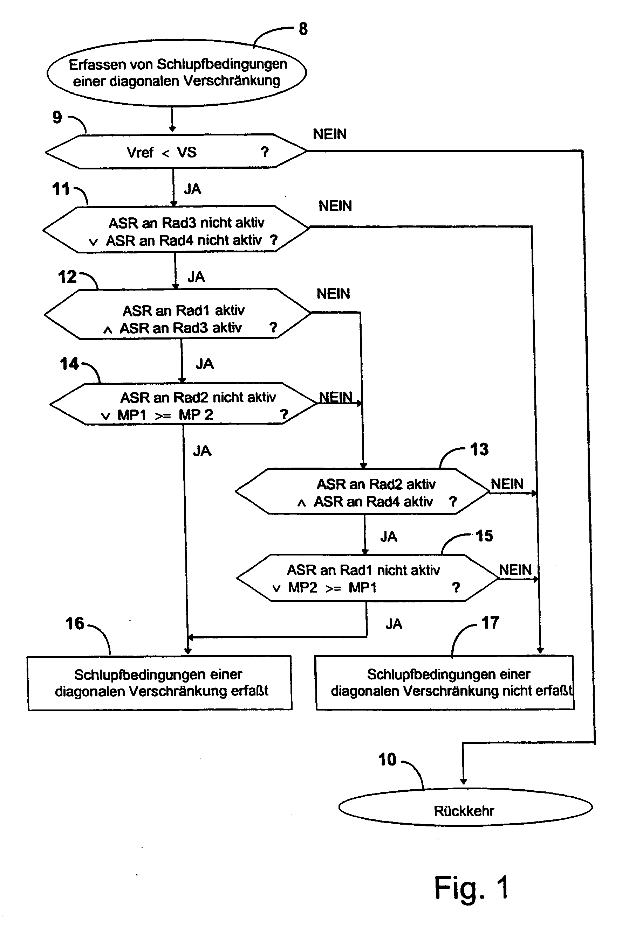

Fig. 1 zeigt ein Flußdiagramm einer erfindungsgemäßen Ausführungsform des Verfahrens zum Erfassen von Schlupfbedingungen einer diagonalen Achsverschränkung bei einem Fahrzeug mit einem primären Vorderradantrieb in einem ASR-Regelzyklus.

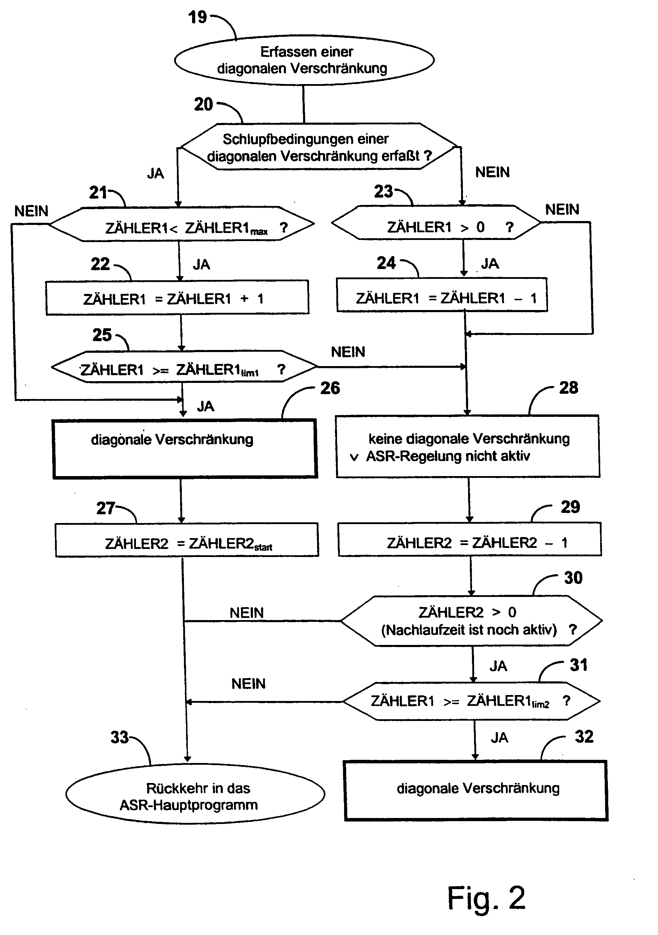

Fig. 2 zeigt ein Flußdiagramm einer erfindungsgemäßen Ausführungsform des Verfahrens zum Ermitteln einer diagonalen Achsverschränkung, nachdem die Schlupfbedingungen einer diagonalen Achsverschränkung, insbesondere gemäß dem in der Fig. 1 dargestellten Ablauf, erfaßt wurden.

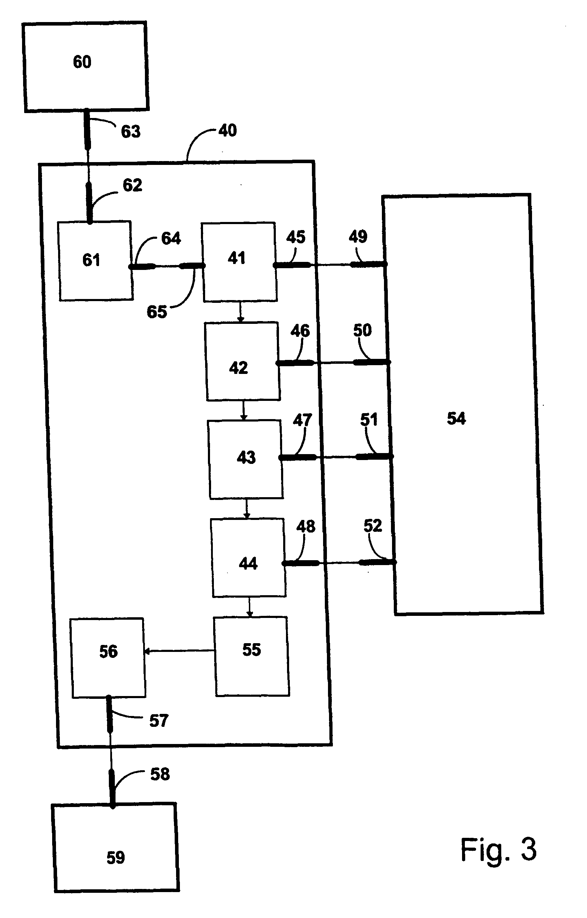

In Fig. 3 ist ein Blockschaltbild einer erfindungsgemäßen Ausführungsform der Schaltungsanordnung zum Erfassen einer diagonalen Achsverschränkung gezeigt.

In Fig. 1 wird hier eingangs nach dem Start (Schritt 8) als eine grundsätzliche Bedingung für das Erkennen einer Schlupfbedingung einer diagonalen Achsverschränkung mit der Abfrage 9 eine geringe Fahrzeuggeschwindigkeit oder Fahrzeugreferenzgeschwindigkeit ($V_{ref}$) unterhalb einer Geschwindigkeitsschwelle (VS) gefordert. Da bei einer diagonalen Achsverschränkung die beiden aufstehenden Räder normalerweise nicht überdrehen, stimmt eine geschätzte Fahrzeugreferenzgeschwindigkeit ($V_{ref}$) recht gut mit der tatsächlichen Fahrzeuggeschwindigkeit überein. Um das Muster beim Anfahren nicht zu verlernen, wird vorzugsweise eine $V_{ref}$ kleiner 3 bis 15 km/h, z.B. kleiner ca. 6 km/h, gefordert. Diese Geschwindigkeitsschwelle VS kann, im Gegensatz zum vorliegenden konkreten Ausführungsbeispiel (konstanter Wert), auch eine Funktion der Erkennungssicherheit sein. Denn bei einem relativ hohen Druckniveau und einem relativ starken Eingriff der ASR-Regelung wird in der Regel auch die Fahrzeuggeschwindigkeit relativ niedrig sein, wodurch die vorstehende Bedingung erfüllt wird.

Weiterhin darf das ASR nur an einem der beiden Rädern der sekundären Antriebsachse aktiv sein, daß bedeutet an den Räder 3 und 4 nach der eingangs eingeführten Definition (Rad1 = links vorne, Rad 2 = rechts vorne, Rad3 = rechts hinten, Rad4 = links hinten), welche im folgenden beibehalten wird. Diese Forderung wird bei Erfüllung des Kriteriums einer geringen Fahrzeugreferenzgeschwindigkeit (Schritt 10) im Schritt 11 mit der Abfrage ASR an Rad3 nicht aktiv oder ASR an Rad4 nicht aktiv' geprüft.

Wird die Bedingung 11 erfüllt, dann schreitet die Abfrage weiter zu Schritt 12, wo die Bedingung 'ASR an Rad1 aktiv und ASR an Rad3 aktiv' (Fall A) geprüft wird. Ist das ASR an Rad1 und Rad3 nicht aktiv, wird die korrespondierende Bedingung 'ASR an Rad2 aktiv und ASR an Rad4 aktiv' (Fall B) in einem anschließenden Schritt 13 überprüft. Mit den Abfragen 12 und 13 wird das Auftreten eines Schlupfes der diagonal gegenüberliegenden Radpaare Rad1 und Rad3 im Fall A sowie Rad2 und Rad4 im Fall B erkannt.

Von den Rädern der primären Antriebsachse (Rad1 und Rad2) sollte entsprechend nur am diagonal zum geregelten Rad der sekundären Achse befindlichen Rad ein ASR-Eingriff erfolgen. Daher werden die Bedingungen im Schritt 14 beim Fall A -entsprechend einem ASR-geregelten Rad1- 'ASR an Rad 2 nicht aktiv' und im Schritt 15 -entsprechend einem ASR-geregelten Rad2- gemäß Fall B 'ASR an Rad 1 nicht aktiv' geprüft. Diese Forderungen können in bestimmten Situationen, z.B. bei einem nur kurzzeitigen "Abreißen" eines relativ gut aufliegenden Rades, nicht immer erfüllt werden, da hier kurzzeitig eine ASR-Regelung erfolgen kann. Deshalb wird hier bei dem Rad, welches dem hauptsächlich geregelten Rad (Rad 1 im Fall A und Rad 2 im Fall B) gegenüberliegt (Rad 2 im Fall A und Rad 1 im Fall B) zumindest ein kleinerer Modelldruck gefordert. Der hier mit "Modelldruck" bezeichnete Druck bedeutet einen für eine bestimmte Radbremse berechneten Druck.

Sind die Bedingungen der Schritte 9,11,12 und 14 im Fall A und 9,11,13 und 15 im Fall B erfüllt, liegen Schlupfbedingungen einer diagonalen Achsverschränkung vor. Diese werden im Schritt 16 erfaßt, ansonsten nicht erfaßt (Schritt 17).

Die oben genannten Schlupfbedingungen bzw. ASR-Regelbedingungen für eine diagonale Achsverschränkung eines Fahrzeugs mit primärem Vorderradantrieb können beispielsweise mit folgender Abfrage erkannt werden:

```
Falls ((Vref < VS)
   und ein Rad der sekundären Achse nicht aktiv
```

```
und ((ASR aktiv an Rad1 und ASR aktiv an Rad3
    und ((Modelldruck Rad1 >= Modelldruck Rad2)
        oder ASR nicht aktiv am Rad2
        )
    )
oder((ASR aktiv an Rad1 und ASR aktiv an Rad3
    und ((Modelldruck Rad1 >= Modelldruck Rad2)
        oder ASR nicht aktiv am Rad2
        )
    )
    )
)
```

Analoge Verhältnisse ergeben sich für primären Hinterradantrieb, wobei hier die Druckbedingungen und die Bedingung 'ASR nicht aktiv' entsprechend für die Räder der Hinterachse (Rad 3 und 4) gelten.

Im Anschluß an das in Fig.1 dargestellte Erfassen der Schlupfbedingungen einer diagonalen Achsverschränkung in einem ASR-Regelzyklus (Schritt 16), wird der Zustand einer diagonalen Achsverschränkung vorteilhaft gemäß dem in Fig.2 gezeigten Flußdiagramm festgestellt (Schritt 19). Sind die Schlupfbedingungen für eine diagonale Achsverschränkung in einem ASR-Regelungszyklus erfaßt (Schritt 20), wird ein mitgeführter erster Zähler (ZÄHLER1), sofern der Wert des ersten Zählers unterhalb eines bestimmten Maximalwerts (ZÄHLER1$_{max}$) ist (Schritt 21) im anschließenden Schritt 22 um 1 inkrementiert.

Im anderen Fall, wenn die Schlupfbedingungen im Schritt 20 nicht erfüllt sind und wenn der erste Zähler einen Wert größer null(0) hat (Schritt 23), wird der erste Zähler im anschließenden Schritt 24 um 1 dekrementiert, wobei das Verringern bis auf den Wert null(0) durchgeführt wird.

Dies Bedingungen können zum Beispiel mit der folgenden Abfrage erkannt werden:

```
Falls (obige Bedingung erfüllt)
{
   Falls (ZÄHLER1 < ZÄHLER1max)
        ZÄHLER1 = ZÄHLER1 +1
}
Andererseits (wenn obige Bedingung nicht erfüllt)
{
  Falls (ZÄHLER1 > 0)
        ZÄHLER1 = ZÄHLER1 - 1
```

An den Schritt 22 anschließend wird dann im Schritt 25 geprüft, ob der Wert des ersten Zählers einen Schwellwert (ZÄHLER1$_{lim1}$) überschreitet, welcher Schwellwert unterhalb des Maximalwerts ZÄHLER1$_{max}$ liegt. Ist der erste Zähler größer als der Schwellwert ZÄHLER1$_{lim1}$, bedeutet das, daß die genannten Bedingungen über einen bestimmten Zeitraum, beispielsweise 0,3 bis 1,5 sec., vorzugsweise ca. 0,7 sec., in Folge erkannt wurden. Es wird dann davon ausgegangen, daß die Situation einer diagonalen Achsverschränkung erkannt wurde (Schritt 26). Dann kann ein Signal für das Vorliegen einer diagonalen Achsverschränkung erzeugt werden, beispielsweise kann ein spezielles Steuerbit gesetzt werden, im anderen Fall kann es gelöscht werden.

Dies kann beispielsweise mit Hilfe der folgenden Abfrageschritten durchgeführt werden:

```
Falls (ZÄHLER1 > ZÄHLER1lim)
      Diagonale Verschränkung liegt vor
Andererseits (wenn ZÄHLER1 < ZÄHLER1lim1)
      Diagonale Verschränkung liegt nicht vor
```

Da der ZÄHLER1 bis ZÄHLER1$_{max}$ zählen kann und die Situation oberhalb des Werts ZÄHLER1$_{lim1}$ als erkannt gilt, hat der Mechanismus ein "Gedächtnis" von ZAHLER1$_{max}$ minus ZÄHLER1$_{lim1}$ mal Zykluszeit. Ein weiterer Nachlaufeffekt wird sich in der Regel dadurch einstellen, daß die Regelphasen an der Diagonale länger aufrecht erhalten bleiben als die Situation der diagonalen Achsverschränkung.

Um dies zu vermeiden, wird bei einer erkannten diagonalen Verschränkung ein zweiter Zähler (ZÄHLER2) auf einen Startwert ZÄHLER2$_{start}$ gesetzt (Schritt 27). Bei nicht erkannter diagonaler Verschränkung (Schritt 28) oder außerhalb einer aktiven ASR-Regelung wird dieser Zähler in einem vorgegebenen Zeitraster bis zum Wert 0 dekrementiert (Schritt 29). Diese Zeitspanne beträgt zum Beispiel 10 sec. Wird innerhalb dieser "Nachlaufzeit" die ASR-Regelung aufgrund überdrehender Antriebsräder erneut aktiv und liegen weiter die oben genannten Bedingungen vor (Schritt 30), so wird, wenn der ZÄHLER1 einen im Vergleich zu dem Wert ZÄHLER1$_{lim1}$ wesentlich niedrigeren, vorzugsweise einen um 80 bis 90 % niedrigeren, Wert, ZÄHLER1$_{lim2}$ erreicht hat (Schritt 31), das Steuerbit bereits gesetzt (Schritt 32). Im anderen Fall erfolgt eine Rückkehr in das ASR-Hauptprogramm (Schritt 33). Die Erkennungszeit reduziert sich in dieser Situation also wesentlich. Der oben genannte Nachteil wird damit zuverlässig vermieden.

Mit Hilfe der folgenden Abfrage können diese Bedingungen (Zähler2) zum Beispiel erkannt werden:

```
Falls ((ZÄHLER2 > 0)
     und (Schlupfbedingungen einer diagonalen
        Verschränkung erkannt)
     und (ASR aktiv)
Dann falls (ZÄHLER1 >= ZÄHLER1lim2)
          Diagonale Verschränkung erkannt
```

Nach der Erfindung können vorteilhaft sämtliche zuvor dargestellten Schritte durch eine programmgesteuerte Schaltung als entsprechende Programmschritte oder durch ein Unterprogramm innerhalb eines ASR-Systems realisiert werden.

Die Schritte können aber ebenso mit Hilfe einer Schaltungsanordnung realisiert werden. In Fig. 3 ist das Blockschaltbild einer Schaltungsanordnung dargestellt, welche beispielhaft die wesentlichen elektrischen/elektronischen Komponenten einer Ausführungsform zum Erfassen einer diagonalen Achsverschränkung gemäß der Erfindung zeigt.

Wesentlich für die Erfindung ist die erste Ermittlungsschaltung 40. Der ersten Ermittlungsschaltung 40 sind eine erste, zweite, dritte und vierte Auswertungsschaltung 41,42,43,44 zur Auswertung eines Schlupfs der Räder an der sekundären Achse (Schaltung 41), der Räder der jeweils zwei diagonal gegenüberliegenden Radpaare (Schaltung 42 und 43), und der Räder an der primären Achse (Schaltung 44), zugeordnet. Eingänge 45,46,47,48 der Auswertungsschaltungen 41,42,43,44 sind verbunden mit entsprechenden Ausgängen 49,50,51,52 einer Erfassungsschaltung 54 zu Erfassung des gemessenen Drehverhaltens bzw. Drehverhaltensänderungen bzw. Antriebsschlupfs der einzelnen, angetriebenen Räder. Die erste Ermittlungsschaltung 40 weist ferner einen Integrator 55 und einen Signalerzeuger 56 auf. Wenn auf Grundlage der Auswertung durch die erste, zweite, dritte und vierte Auswertungsschaltung Eingänge 45,46,47,48 der Auswertungsschaltungen 41,42,43,44 typische Schlupfbedingungen für eine diagonale Achsverschränkung über einen vorbestimmten Zeitraum mit Hilfe des Integrators 55 erkannt wurden, wird mit Hilfe des Signalerzeugers 56 ein Signal erzeugt und über einen Ausgang 57 des Signalerzeugers 56 einem Eingang 58 einer Regelschaltung 59 zugeführt, um einen ensprechenden ASR-Regelungseingriff auszulösen. In einer bevorzugten Ausführungsform ist es vorgesehen, daß der ersten Ermittlungsschaltung 40 eine zweite Ermittlungsschaltung 60 zugeordnet ist, für die Ermittlung einer Fahrzeugreferenzgeschwindigkeit anhand gemessener Werte, und daß die erste Ermittlungsschaltung 40 einen Vergleicher 61 aufweist, welcher Vergleicher 61 einen Eingang 62 für ein aus einem Ausgang 63 der zweiten Ermittlungsschaltung 60 kommendes Signal für die ermittelte Fahrzeugreferenzgeschwindigkeit aufweist. Mit Hilfe des Vergleichers 61 wird die ermittelte Fahrzeugreferenzgeschwindigkeit mit einem vorbestimmten Grenzwert verglichen. Der Vergleicher ist hier über einen Ausgang 64 mit einem Eingang 65 der Auswertungsschaltung 41 verbunden und erzeugt direkt oder über hier nicht näher dargestellte, weitere Schaltungen ein Signal, damit die Auswertung durch die Auswertungsschaltungen 41,42,43,44 nur erfolgt, wenn die Fahrzeugreferenzgeschwindigkeit kleiner als der vorgegebene Grenzwert ist. In diesem Fall wird die ersten Ermittlungsschaltung ein Signal für das Vorliegen einer diagonalen Achsverschränkung nur dann erzeugen, wenn die ermittelte Fahrzeugreferenzgeschwindigkeit den vorbestimmten Wert unterschreitet, daß bedeutet insbesondere im Fall einer Fahrsituation im ."schwierigen"' Gelände bei niedrigen Fahrzeuggeschwindigkeiten.

**Patentansprüche**

1.  Fahrzeugregelungsverfahren zur Verbesserung der Traktion eines Fahrzeugs mit Allradantrieb, insbesondere zur Verbesserung einer Antriebsschlupfregelung (ASR),
    **dadurch gekennzeichnet,**
    **dass** eine diagonale Achsverschränkung, die durch eine Verringerung der Aufstandskraft bzw. ein Abheben eines Rades einer vorderen Achse und eines diagonal gegenüberliegenden Rades einer hinteren Achse **gekennzeichnet** ist, ermittelt wird und als Regelgröße ausgewertet wird, wobei nach der Ermittlung der diagonalen Achsverschränkung mit Mitteln der Fahrzeugregelung, insbesondere ASR, die Wirkung einer teilweisen oder vollständigen Sperrung eines Mitten-, Vorderachs- und/oder Hinterachsdifferentials erzielt wird und/oder ein Mitten-, Vorderachs- und/oder Hinterachsdifferential mit Hilfe einer gegebenenfalls vorhandenen Differentialsperre teilweise oder vollständig gesperrt wird, wobei nach der Ermittlung der diagonalen Achsverschränkung, ein entsprechend der geforderten Traktion mittleres Bremsdruckniveau an den Radbremsen der geregelten Räder bei einem minimalen Antriebsschlupf eingestellt und für einen bestimmten Zeitraum gehalten wird.

**2.** Verfahren nach Anspruch 1,
**dadurch gekennzeichnet,**
**daß** nach der Ermittlung der diagonalen Achsverschränkung zusätzlich eine Absenkung der Regelschwelle des Antriebsschlupfregelsystems erfolgt.

**3.** Verfahren nach Anspruche 1 oder 2,
**dadurch gekennzeichnet,**
**daß** die ermittelte diagonale Achsverschränkung als Regelgröße ausgewertet wird und/oder eine entsprechende Regelungsfunktion der Fahrzeugregelung nur dann in Funktion gesetzt wird, wenn die Fahrzeuggeschwindigkeit, insbesondere eine berechnete oder geschätzte Fahrzeugreferenzgeschwindigkeit, einen vorgegebenen Fahrzeuggeschwindigkeits-Grenzwert, vorzugsweise im Bereich von 3 bis 15 km/h, unterschreitet.

**4.** Verfahren zum Erkennen einer diagonalen Achsverschränkung, die durch eine Verringerung der Aufstandskraft bzw. ein Abheben eines Rades einer vorderen Achse und eines diagonal gegenüberliegenden Rades einer hinteren Achse **gekennzeichnet** ist, von einem Fahrzeug mit Allradantrieb und einer Fahrzeugregelung, insbesondere Antriebsschlupfregelung (ASR),
**dadurch gekennzeichnet,**
**daß** die diagonale Achsverschränkung auf Grundlage des Radschlupfs, des Drehverhaltens und/oder von Drehverhaltensänderungen der einzelnen, angetriebenen Räder ermittelt wird, wobei eine diagonale Achsverschränkung auf Grundlage des Drehverhaltens und/oder von Drehverhaltensänderungen von mindestens zwei transversal gegenüberliegenden Rädern sowie von zwei jeweils diagonal gegenüberliegenden Radpaaren ermittelt wird.

**5.** Verfahren zum Erkennen einer diagonalen Achsverschränkung nach Anspruch 4,
**dadurch gekennzeichnet,**
**daß** das Drehverhalten der einzelnen, angetriebenen Räder gemessen und zur Ermittlung des Antriebsschlupfs und anderer Regelgrößen ausgewertet wird und daß eine diagonale Achsverschränkung auf Grundlage eines über einen vorgegebenen Grenzwert liegenden Antriebsschlupfs der einzelnen Räder ermittelt wird.

**6.** Verfahren nach Anspruch 4 oder 5,
**dadurch gekennzeichnet,**
**daß** eine diagonale Achsverschränkung dann ermittelt wird, wenn bestimmte Antriebsschlupfbedingungen für einen vorbestimmten Zeitraum erfüllt sind.

**7.** Verfahren nach Anspruch 6,
**dadurch gekennzeichnet,**
**daß** eine diagonale Achsverschränkung dann erfaßt wird, wenn die folgenden Bedingungen für einen vorbestimmten Zeitraum erfüllt sind, daß

a) an der sekundären Achse nur an einem Rad ein über einen vorgegebenen Grenzwert liegender Antriebsschlupf vorliegt,
b) an beiden von zwei sich diagonal gegenüberliegenden Rädern eines Radpaares ein über dem vorgegebenen Grenzwert liegender Antriebsschlupf vorliegt und
c) ein unter dem vorgegebenen Grenzwert liegender Antriebsschlupf an einem ersten Rad der primären Achse vorliegt, welches erste Rad einem zweiten Rad der primären Achse mit einem über den vorgegebenen Grenzwert liegenden Antriebsschlupf gegenüberliegt oder zumindest ein geringerer Bremsdruck, im Vergleich zu dem zweiten Rad der primären Achse mit einem über den vorgegebenen Grenzwert liegenden Antriebsschlupf, in der Radbremse des ersten Rads der primären Achse vorliegt, welches erste Rad dem zweiten Rad der primären Achse mit einem über den vorgegebenen Grenzwert liegenden Antriebsschlupf gegenüberliegt.

**8.** Verfahren nach Anspruch 7,
**dadurch gekennzeichnet,**
**daß** der Zustand einer diagonalen Achsverschränkung dann ermittelt wird, wenn die Bedingungen a) bis c) für einen Zeitraum von 0,3 bis 1,5 sec. erfüllt sind.

**9.** Verfahren nach Anspruch 6 oder 7,
**dadurch gekennzeichnet,**
**daß** eine diagonale Achsverschränkung dann ermittelt wird, wenn die bestimmten Antriebsschlupfbedingungen für einen relativ kurzen Zeitraum, vorzugsweise 50 bis 200 msec., erfüllt sind und wenn die davor zuletzt ermittelte diagonale Achsverschränkung höchstens einige Sekunden, vorzugsweise 5 bis 15 sec., zurück liegt.

**10.** Verfahren nach einem der Ansprüche 5 bis 9,
**dadurch gekennzeichnet,**
**daß** ein Antriebsschlupf, bezogen auf die Radumdrehungsgschwindigkeit des durchdrehenden Rads, in der Größenordnung zwischen 10 km/h bis 40 km/h , als Antriebsschlupf-Grenzwert vorgegeben wird.

**11.** Verfahren nach einem der Ansprüche 5 bis 10,
**dadurch gekennzeichnet,**
**daß** der Antriebsschlupf-Grenzwert an einem Rad als überschritten gilt, wenn ein Regelvorgang des Antriebsschlupfregelsystems an dem jeweiligen Rad einsetzt oder anhält.

**12.** Verfahren zur Fahrzeugregelung, insbesondere zur Antriebsschlupfregelung (ASR),
**dadurch gekennzeichnet,**
**daß** die diagonale Achsverschränkung ermittelt wird mit Hilfe eines Verfahrens nach einem der Ansprüche 4 bis 11.

**13.** Schaltungsanordnung zum Erkennen einer diagonalen Achsverschränkung, die durch eine Verringerung der Aufstandskraft bzw. ein Abheben eines Rades einer vorderen Achse und eines diagonal gegenüberliegenden Rades einer hinteren Achse **gekennzeichnet** ist, von einem Fahrzeug mit Allradantrieb und einem Antriebsschlupfregelsystem, welches Fahrzeug eine Erfassungsschaltung aufweist, zur Erfassung von gemessenen Drehverhaltensänderungen der angetriebenen Räder,
**dadurch gekennzeichnet,**
**daß** die Schaltungsanordnung eine erste Ermittlungsschaltung (40) aufweist, zum Ermitteln einer diagonalen Achsverschränkung des Fahrzeugs auf Grundlage der von der Erfassungsschaltung (54) erfaßten Drehverhaltensänderungen der angetriebenen Räder, wobei diese ein Mittel zur Auswertung des Drehverhaltens und/oder von Drehverhaltensänderungen von mindestens zwei transversal gegenüberliegenden Rädern sowie von zwei jeweils diagonal gegenüberliegenden Radpaaren aufweist.

**14.** Schaltungsanordnung nach Anspruch 13,
**dadurch gekennzeichnet,**
**daß** die erste Ermittlungsschaltung (40) eine erste Auswertungsschaltung (41), zur Auswertung eines Schlupfs der Räder an der sekundären Achse aufweist, daß die erste Ermittlungsschaltung (40) eine zweite und eine dritte Auswertungsschaltung (42, 43) aufweist, zur Auswertung eines Schlupfs der Räder der jeweils zwei diagonal gegenüberliegenden Radpaare, daß die erste Ermittlungsschaltung (40) eine vierte Auswertungsschaltung (44) aufweist, zur Auswertung eines Schlupfs der Räder an der primären Achse, und daß die erste Ermittlungsschaltung (40) einen Integrator (55) und einen Signalerzeuger (56) aufweist, zur Erzeugung eines Signals, wenn mit Hilfe der Auswertung durch die erste, zweite, dritte und vierte Auswertungsschaltung (41, 42, 43, 44) über einen vorbestimmten Zeitraum bestimmte, für eine diagonale Achsverschränkung typische Schlupfbedingungen erkannt werden.

**15.** Schaltungsanordnung nach Anspruch 13 oder 14,
**dadurch gekennzeichnet,**
**daß** der ersten Ermittlungsschaltung (40) eine zweite Ermittlungsschaltung (60) zugeordnet ist, für die Ermittlung einer Fahrzeugreferenzgeschwindigkeit anhand gemessener Werte, und daß die erste Ermittlungsschaltung (40) einen Vergleicher (61) aufweist, um die ermittelte Fahrzeugreferenzgeschwindigkeit mit einem vorbestimmten Grenzwert zu vergleichen und wobei die erste Ermittlungsschaltung (40) ein Signal für das Vorliegen einer diagonalen Achsverschränkung nur dann erzeugt, wenn die ermittelte Fahrzeugreferenzgeschwindigkeit den vorbestimmten Wert unterschreitet.

**Claims**

**1.** Method for controlling a vehicle for improving the traction of a vehicle with all-wheel drive, in particular for improving a traction slip control system (TCS), **characterized in that** a diagonal axle twist, which is **characterized by** a reduction of the contact force or by lifting of a wheel of a front axle and of a diagonally opposite wheel of a rear axle, is detected and evaluated as a regulating variable, in which case following the detection of the diagonal axle twist, the effect of a partial or complete lock of a centre differential, front-axle and/or rear-axle differential is achieved with means of the vehicle control system, especially TCS, and/or a centre differential, front-axle and/or rear-axle differential is locked partially or completely with the help of a differential lock, if such is available, in which case following the detection of the diagonal axle twist, a brake pressure level that is a medium one corresponding to the demanded traction is set at the wheel brakes of the controlled wheels with a minimum traction slip, and is maintained for a certain period of time.

2. Method according to Claim 1, **characterized in that** following the detection of a diagonal axle twist, the control threshold of the traction slip control system is additionally reduced.

3. Method according to Claim 1 or 2, **characterized in that** the detected diagonal axle twist is evaluated as a regulating variable and/or a corresponding control function of the vehicle control system is only activated when the vehicle speed, in particular a calculated or estimated vehicle reference speed, falls below a specified vehicle speed limit value, preferably within the range of 3 to 15 km/h.

4. Method for detecting a diagonal axle twist, which is **characterized by** a reduction of the contact force or by lifting of a wheel of a front axle and a diagonally opposite wheel of a rear axle, in a vehicle with all-wheel drive and a vehicle control system, in particular a traction-slip control system (TCS), **characterized in that** the diagonal axle twist is determined on the basis of the wheel slip, the rotating behaviour and/or changes in the rotating behaviour of the individual, driven wheels, in which case a diagonal axle twist is determined on the basis of the rotating behaviour and/or changes in the rotating behaviour of at least two transversally opposite wheels as well as two diagonally opposite pairs of wheels respectively.

5. Method for detecting a diagonal axle twist according to Claim 4, **characterized in that** the rotating behaviour of the individual, driven wheels is measured and evaluated to determine the traction slip and other regulating variables and that a diagonal axle twist is determined on the basis of a rate of traction slip of the individual wheels that is higher than a specified limit value.

6. Method according to Claim 4 or 5, **characterized in that** a diagonal axle twist is determined when certain traction slip conditions are satisfied for a predetermined period of time.

7. Method according to Claim 6, **characterized in that** a diagonal axle twist is detected when the following conditions are satisfied for a predefined period of time:

a) a rate of traction slip higher than a specified limit value prevails only on one wheel of the secondary axle;
b) a rate of traction slip higher than the specified limit value prevails on both of two diagonally opposite wheels of a pair of wheels, and
c) a rate of traction slip lower than the specified limit value prevails on a first wheel of the primary axle, with such first wheel lying opposite a second wheel of the primary axle with a traction slip greater than the specified limit value, or at least a lower brake pressure, compared to the second wheel of the primary axle with a rate of traction slip higher than the specified limit value, prevails in the wheel brake of the first wheel of the primary axle, with such first wheel lying opposite the second wheel of the primary axle with a rate of traction slip higher than the specified limit value.

8. Method according to Claim 7, **characterized in that** the state of a diagonal axle twist is determined when the conditions a) to c) are satisfied for a period of time of 0.3 to 1.5 sec.

9. Method according to Claim 6 or 7, **characterized in that** a diagonal axle twist is determined when the specified traction slip conditions are satisfied for a relatively short period of time, preferably 50 to 200 msec, and when the last previous diagonal axle twist was determined at most a few seconds before, preferably 5 to 15 sec.

10. Method according to one of the Claims 5 to 9, **characterized in that** traction slip, related to the wheel rotation speed of the spinning wheel, is specified as the traction slip limit value within a range of 10 km/h to 40 km/h.

11. Method according to one of the Claims 5 to 10, **characterized in that** the traction slip limit value on a wheel is considered to have been exceeded when a control operation of the traction slip control system sets in or is continued at the respective wheel.

12. Method for controlling a motor vehicle, in particular for traction slip control (TCS), **characterized in that** the diagonal axle twist is detected with the help of a method according to one of the Claims 4 to 11.

13. Circuit arrangement for detecting a diagonal axle twist of a vehicle with all-wheel drive and a traction slip control system, which said axle twist is **characterized by** a reduction of the contact force or by lifting of a wheel of a front axle and of a diagonally opposite wheel of a rear axle, with such vehicle exhibiting a detection circuit for detecting measured changes in the rotating behaviour of the driven wheels, **characterized in that** the circuit arrangement includes a first detection circuit (40) for detecting a diagonal axle twist of the vehicle on the basis of the changes in the rotating behaviour of the driven wheels detected by the detection circuit (54), in which case this circuit includes a means for evaluating the rotating behaviour and/or changes in the rotating behaviour of at least two transversally opposite wheels as well as two diagonally opposite pairs of wheels respectively.

14. Circuit arrangement according to Claim 13, **characterized in that** the first detection circuit (40) includes a first evaluating circuit (41) for evaluating slip of the wheels on the secondary axle, **in that** the first detection circuit (40) includes a second and third evaluation circuit (42, 43) for evaluating slip of the wheels of the two diagonally opposite pairs of wheels respectively, that the first detection circuit (40) includes a fourth evaluation circuit (44) for evaluating slip of the wheels on the primary axle, and **in that** the first detection circuit (40) includes an integrator (55) and a signal generator (56) for generating a signal when slip conditions typical of a diagonal axle twist have been detected over a certain period of time with the help of the evaluation of the first, second, third and fourth evaluating circuits (41, 42, 43, 44).

15. Circuit arrangement according to Claim 13 or 14, **characterized in that** a second detection circuit (60) is associated with the first detection circuit (40) for detecting a vehicle reference speed on the basis of measured values, and **in that** the first detection circuit (40) includes a comparator (61) for comparing the determined vehicle reference speed with a specified limit value, with the first detection circuit (40) generating a signal indicating a diagonal axle twist only if the determined vehicle reference speed falls below the specified value.

**Revendications**

1. Procédé de régulation de véhicule pour améliorer la traction d'un véhicule à transmission intégrale, en particulier pour améliorer une régulation du patinage à l'accélération (ASR),
   **caractérisé**
   **en ce qu'**il est déterminé une déformation diagonale d'essieu, qui est **caractérisée par** une réduction de la force de contact ou un soulèvement d'une roue d'un essieu avant et d'une roue opposée en diagonale d'un essieu arrière, qui est exploitée comme grandeur de régulation, et après détermination de la déformation diagonale d'essieu avec des moyens de la régulation de véhicule, en particulier la régulation du patinage à l'accélération, l'effet d'un blocage partiel ou complet d'un différentiel central, d'essieu avant et/ou d'essieu arrière est obtenu et un différentiel central, d'essieu avant et/ou d'essieu arrière est partiellement ou totalement bloqué à l'aide d'un verrouillage de différentiel éventuellement prévu, et après détermination de la déformation diagonale d'essieu, un niveau de pression de frein moyen, correspondant à la traction exigée, est réglé sur les freins de roue des roues régulées pour un patinage minimal à l'accélération et pour un laps de temps déterminé.

2. Procédé selon la revendication 1,
   **caractérisé**
   **en ce qu'**après détermination de la déformation diagonale d'essieu, il se produit en outre une réduction du seuil de régulation du système de régulation du patinage à l'accélération.

3. Procédé selon la revendication 1 ou 2,
   **caractérisé**
   **en ce que** la déformation diagonale d'essieu déterminée est exploitée comme grandeur de régulation et/ou une fonction de régulation correspondante de la régulation du véhicule n'est mise en fonction que si la vitesse du véhicule, en particulier une vitesse de référence de véhicule calculée ou estimée, passe au-dessous d'une valeur limite de vitesse de véhicule prédéfinie, de préférence dans la plage comprise entre 3 et 15 km/h.

4. Procédé de reconnaissance d'une déformation diagonale d'essieu, qui est **caractérisée par** une réduction de la force de contact ou un soulèvement d'une roue d'un essieu avant et d'une roue opposée en diagonale d'un essieu arrière, d'un véhicule à transmission intégrale et avec une régulation de véhicule, en particulier une régulation du patinage à l'accélération (ASR),
   **caractérisé**
   **en ce que** la déformation diagonale d'essieu est déterminée sur la base du patinage de roue, du comportement à la rotation et/ou de variations du comportement à la rotation des différentes roues motrices, une déformation diagonale d'essieu étant déterminée sur la base du comportement à la rotation et/ou de variations du comportement à la rotation d'au moins deux roues opposées transversalement aussi bien que de deux paires de roues opposées en diagonale.

**5.** Procédé de reconnaissance d'une déformation diagonale d'essieu selon la revendication 4, **caractérisé**

**en ce que** le comportement en rotation des différentes roues motrices est mesuré et exploité pour déterminer le patinage à l'accélération et d'autres grandeurs de régulation, et en ce qu'une déformation diagonale d'essieu est déterminée sur la base d'un patinage à l'accélération des différentes roues, supérieur à une valeur limite prédéfinie.

**6.** Procédé selon la revendication 4 ou 5, **caractérisé**

**en ce qu'**une déformation diagonale d'essieu est déterminée, si des conditions déterminées de patinage à l'accélération sont satisfaites pendant un laps de temps prédéterminé.

**7.** Procédé selon la revendication 6, **caractérisé**

**en ce qu'**une déformation diagonale d'essieu est détectée, si les conditions suivantes sont satisfaites pendant un laps de temps prédéterminé :

a) sur l'essieu secondaire, sur une seule roue, on est en présence d'un patinage à l'accélération supérieur à une valeur limite prédéfinie,
b) sur les deux roues opposées en diagonale d'une paire de roues on est en présence d'un patinage à l'accélération supérieur à la valeur limite prédéfinie, et
c) un patinage à l'accélération inférieur à la valeur limite prédéfinie se manifeste sur une première roue de l'essieu primaire, laquelle première roue fait face à une seconde roue de l'essieu primaire avec un patinage à l'accélération supérieur à la valeur limite prédéfinie, ou au moins une pression de freinage réduite, par rapport à la seconde roue de l'essieu primaire avec un patinage à l'accélération supérieur à la valeur limite prédéfinie, règne dans le frein de roue de la première roue de l'essieu primaire, laquelle première roue fait face à la seconde roue de l'essieu primaire avec un patinage à l'accélération supérieur à la valeur limite prédéfinie.

**8.** Procédé selon la revendication 7, **caractérisé**

**en ce que** l'état d'une déformation diagonale d'essieu est déterminé lorsque les conditions a) à c) sont satisfaites pendant un laps de temps compris entre 0,3 et 1,5 s.

**9.** Procédé selon la revendication 6 ou 7, **caractérisé**

**en ce qu'**une déformation diagonale d'essieu est déterminée si les conditions déterminées de patinage à l'accélération sont satisfaites pendant un laps de temps relativement court, compris de préférence entre 50 et 200 ms, et si la déformation diagonale d'essieu déterminée en dernier remonte à quelques secondes ou plus, de préférence à 5 à 15 s.

**10.** Procédé selon l'une quelconque des revendications 5 à 9, **caractérisé**

**en ce qu'**un patinage à l'accélération, rapporté à la vitesse de rotation de roue de la roue patinante, d'un ordre de grandeur compris entre 10 km/h et 40 km/h, est prédéfini comme valeur limite de patinage à l'accélération.

**11.** Procédé selon l'une quelconque des revendications 5 à 10, **caractérisé**

**en ce que** la valeur limite de patinage à l'accélération sur une roue est considérée comme dépassée, lorsqu'un processus de régulation du système de régulation de patinage à l'accélération sur la roue considérée s'amorce ou se maintient.

**12.** Procédé de régulation de véhicule, en particulier de régulation de patinage à l'accélération (ASR), **caractérisé**

**en ce que** la déformation diagonale d'essieu est déterminée à l'aide d'un procédé selon l'une quelconque des revendications 4 à 11.

13. Ensemble de circuits pour reconnaître une déformation diagonale d'essieu, qui est **caractérisé par** une réduction de la force d'appui ou un soulèvement d'une roue d'un essieu avant et d'une roue opposée en diagonale d'un essieu arrière, d'un véhicule à transmission intégrale et avec un système de régulation du patinage à l'accélération, lequel véhicule comporte un circuit de détection pour relever des variations mesurées du comportement à la rotation des roues motrices,

   **caractérisé**

   **en ce que** l'ensemble de circuits comprend un premier circuit de détermination (40), pour déterminer une déformation diagonale d'essieu du véhicule sur la base des variations de comportement en rotation, relevées par le circuit de détection (54), des roues motrices, celui-ci comportant un moyen pour interpréter le comportement en rotation et/ou des variations de comportement en rotation d'au moins deux roues opposées transversalement aussi bien que de deux paires de roues opposées en diagonale.

14. Ensemble de circuits selon la revendication 13,

   **caractérisé**

   **en ce que** le premier circuit de détermination (40) comporte un premier circuit d'interprétation (41), pour interpréter un patinage des roues sur l'essieu secondaire, en ce que le premier circuit de détermination (40) comporte un deuxième et un troisième circuit d'interprétation (42, 43) pour interpréter un patinage des roues des deux paires de roues opposées en diagonale, en ce que le premier circuit de détermination (40) comporte un quatrième circuit d'interprétation (44) pour interpréter un patinage des roues sur l'essieu primaire, et en ce que le premier circuit de détermination (40) comporte un intégrateur (55) et un générateur de signaux (56), pour produire un signal lorsque des conditions de patinage déterminées, caractéristiques d'une déformation diagonale d'essieu, sont reconnues pendant un laps de temps prédéterminé, à l'aide de l'interprétation par les premier, deuxième, troisième et quatrième circuits d'interprétation (41, 42, 43, 44).

15. Ensemble de circuits selon la revendication 13 ou 14,

   **caractérisé**

   **en ce qu'**au premier circuit de détermination (40) est associé un second circuit de détermination (60), pour la détermination d'une vitesse de référence de véhicule à l'aide de valeurs mesurées, et en ce que le premier circuit de détermination (40) comporte un comparateur (61), afin de comparer la vitesse de référence de véhicule déterminée à une valeur limite prédéterminée, et le premier circuit de détermination (40) ne produisant un signal pour la présence d'une déformation diagonale d'essieu que si la vitesse de référence de véhicule déterminée est inférieure à la valeur prédéterminée.

Fig. 1

19 — Erfassen einer diagonalen Verschränkung

20 — Schlupfbedingungen einer diagonalen Verschränkung erfaßt ?

JA     NEIN

21 — ZÄHLER1 < ZÄHLER1$_{max}$ ?

NEIN

23 — ZÄHLER1 > 0 ?

NEIN

22 — JA    ZÄHLER1 = ZÄHLER1 + 1

24 — JA    ZÄHLER1 = ZÄHLER1 – 1

25 — ZÄHLER1 >= ZÄHLER1$_{lim1}$ ?

NEIN

26    JA

diagonale Verschränkung

28 — keine diagonale Verschränkung ∨ ASR-Regelung nicht aktiv

27 — ZÄHLER2 = ZÄHLER2$_{start}$

29 — ZÄHLER2 = ZÄHLER2 – 1

30 — ZÄHLER2 > 0 (Nachlaufzeit ist noch aktiv) ?

NEIN

JA   31 — ZÄHLER1 >= ZÄHLER1$_{lim2}$ ?

NEIN

JA   32 — diagonale Verschränkung

33 — Rückkehr in das ASR-Hauptprogramm

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4589511 A